# FASCICULE DE BREVET EUROPEEN

(11) **EP 2 282 877 B1**
(45) Date de publication et mention de la délivrance du brevet: **08.08.2012**
(21) Numéro de dépôt: 09772673.1
(22) Date de dépôt: 07.04.2009
(51) Int. Cl.: B29B 11/16, B29C 70/48

(54) **PROCÉDÉ DE FABRICATION D'UNE PIÈCE À CORPS CREUX EN MATÉRIAU COMPOSITE ET PIÈCE AINSI OBTENUE**
VERFAHREN ZUR HERSTELLUNG EINES TEILS MIT EINEM HOHLKÖRPER AUS EINEM VERBUNDMATERIAL UND DANACH HERGESTELLTES TEIL
METHOD FOR PRODUCING A PART COMPRISING A HOLLOW BODY MADE FROM A COMPOSITE MATERIAL AND PART OBTAINED THEREBY

(30) Priorité: 11.06.2008 FR 0803240
(43) Date de publication de la demande: 16.02.2011
(73) Titulaire: Aircelle, 76700 Gonfreville l'Orcher (FR)
(72) Inventeur: DESJOYEAUX, Bertrand, F-76310 Sainte Adresse (FR)
(74) Mandataire: Gaillarde, Frédéric F. Ch.
(86) Numéro de dépôt international: PCT/FR2009/050590
(87) Numéro de publication internationale: WO 2010/000990

(56) Documents cités:
- EP-A- 0 749 825
- WO-A-02/42044
- WO-A-2004/069527
- WO-A-2006/069581
- FR-A- 2 893 683
- GB-A- 2 410 921
- US-A- 6 004 123

## Description

La présente invention se rapporte à un procédé de fabrication d'une pièce à corps creux en matériau composite.

La présente invention concerne plus particulièrement la réalisation de structures fortement chargées et ayant un corps principal creux. On pourra notamment citer la réalisation de bielles de train d'atterrissage, boggie, mât d'accrochage dans une nacelle de turboréacteur, pylône d'un turboréacteur, etc.

On connaît plusieurs procédés pour fabriquer des pièces composites à corps creux, notamment les procédés RTM / LRI (Resin Transfer Molding / Liquid Resin Infusion) et le procédé préimprégné. On connaît aussi des techniques de drapage de plis ou d'enroulement filamentaires qui peuvent être appliquées à l'un ou l'autre des procédés cités.

Dans un procédé RTM / LRI, un ensemble d'éléments fibreux est positionné de manière particulière au tour d'un support. Cet ensemble d'élément fibreux forme une préforme qui, avec son support, est ensuite placée dans un moule à l'intérieur duquel une résine est injectée, généralement sous vide ou sous pression. La résine est ensuite polymérisée formant ainsi un matériau composite rigide et léger formé de fibres et de résine polymérisée.

Le procédé RTM / LRI présente une grande flexibilité et permet la réalisation de pièces à géométrie complexe. En effet, les fibres des éléments fibreux étant initialement sèches, elles peuvent être mises en place plus facilement pour prendre la forme du support.

Le procédé RTM / LRI présente également l'avantage de nécessiter moins d'opérations d'assemblage puisque cette possibilité de réaliser des pièces de forme complexe permet d'éviter de réaliser plusieurs pièces de forme moins complexe pour ensuite les assembler entre elles.

Toutefois, les éléments fibreux étant initialement secs, leurs fibres sont également plus facilement susceptibles de changer d'orientation ou de présenter des défauts d'alignement avant coulage et polymérisation de la résine.

Etant donné que dans un tel matériau composite l'alignement des fibres définit et détermine les lignes de transmission d'efforts, notamment en compression et en flambage, on comprend que la présence de défauts d'alignement des fibres dans la pièces finale a des répercussions négatives sur les propriétés mécaniques de reprise et de transmission des efforts de ladite pièce.

Une amélioration à ce défaut peut être apportée en utilisant une préforme incluant une très faible partie de résine qui sert de fixateur afin de renforcer la liaison des fibres entre-elles, ce procédé nécessitant, outre l'opération d'addition du fixateur, une opération d'étuvage de la préforme formée pour faire agir ce fixateur.

Dans un procédé préimprégné, les éléments fibreux ne sont plus secs mais préimprégnés de résine au moins partiellement polymérisée.

Le fait que les fibres de ces éléments fibreux soient déjà imprégnées de résine limite grandement leur mobilité et changement d'orientation.

Toutefois, le procédé préimprégné présente des inconvénients et ne permet notamment pas ou difficilement la réalisation de pièces à géométrie complexe, la résine limitant fortement la mise en forme des éléments fibreux. Il est donc également difficile d'obtenir un bon taux de compression des fibres entre le support et le moule lors de la polymérisation finale.

Par ailleurs, un tel procédé multiplie les étapes de fabrication puisque les éléments fibreux doivent subir une préimprégnation avant drapage et éventuellement une pré-polymérisation partielle avant mise en forme et polymérisation finale.

Il existe donc un intérêt important à perfectionner les procédés RTM / LRI et de fournir un procédé permettant d'en conserver les avantages tout en assurant une bonne orientation des fibres, une bonne compaction de celles-ci en nombre important.

Plusieurs documents de l'art antérieur ont déjà cherché à résoudre ce problème.

Le document WO 2007/060306 décrit un procédé pour la fabrication d'une bielle en matériau composite à partir d'une seule préforme sèche mise en forme avant coulage de la résine. Dans ce procédé, la préforme présente des bords opposés présentant chacun une surface biseautée complémentaire crée lors de son enroulement autour du support, lesdits bords étant superposés avant d'être joints par la résine.

Toutefois, dans un tel procédé, il existe encore un risque important de déplacement des fibres avant moulage. Ce procédé présente également des inconvénients d'optimisation de masse pour assurer l'alignement des fibres longitudinales.

Le document WO 2007/031649 décrit un procédé pour fabriquer une pièce composite à partir d'une pluralité de préformes sèches et préimprégnées. L'alignement correct des fibres est assuré localement par cette utilisation de préformes préimprégnées. EP-A-749825 décrit les charactéristiques de la revendication 1 sauf maintenir chaque préforme sur un support grâce à des moyens de maintien comprenant une enveloppe fibreuse ramenée sur la préforme et l'enserrant sur le support.

Toutefois, ce procédé nécessite toujours plusieurs étapes de polymérisation.

Les techniques d'enroulement filamentaires, outre qu'elles présentent les mêmes difficultés que cité ci-avant avec les procédés RTM ou préimprégné, peuvent présenter la contrainte de continuité des fibres pour effectuer l'enroulement et donc un handicap pour optimiser la masse de la structure obtenue.

La présente invention vise à pallier les inconvénients précédemment évoqués et consiste pour ce faire en un procédé de fabrication d'une pièce à corps creux en matériau composite comme définie dans la revendication 1.

Ainsi, en réalisant une étape de couture entre les bords de jonction des préformes, on augmente grandement la tenue de ces dernières autour du support et par voie de conséquence la cohésion de fibres.

Selon une première variante de réalisation, la liaison des bords de jonction des préformes est réalisée selon un procédé de couture par piqûre, communément dénommé « stitching » ou « blind stitching », couture de type point de chainette qui peut être obtenu en utilisant qu'un seul fil.

Selon une deuxième variante de réalisation, la liaison des bords de jonction des préformes est réalisée selon un procédé de couture par touffetage, communément dénommé « tufting ».

Selon une troisième variante de réalisation, la liaison des bords de jonction des préformes est réalisée selon un procédé de couture par cloutage, communément dénommé « Z-pinning ».

De manière préférentielle, la couture est réalisée à l'aide d'un fil de carbone sec.

Selon une variante de réalisation, le fil de carbone est un fil pultrudé, c'est-à-dire enrobé de résine et polymérisé (Z-pinning, et autres).

Avantageusement, les préformes sont des préformes sèches. Ainsi, le procédé de fabrication ne nécessite pas d'étape de préimprégnation des préformes.

Préférentiellement, au moins une partie des préformes sont réalisées initialement à plat.

De manière alternative ou complémentaire, au moins une partie des préformes sont réalisées initialement en formage faible.

De manière alternative ou complémentaire, au moins une partie des préformes sont préalablement mise en forme entre un poinçon et une vessie sous vide ou sous pression avant mise en place sur le support.

Selon une première variante de réalisation, la préforme est maintenue par l'intermédiaire d'extrémités de ses bords de jonction.

De manière préférentielle, la préforme est maintenue au moyen de pinces équipant le support et aptes à recevoir une extrémité d'un bord de jonction ou de l'enveloppe fibreuse correspondante.

Avantageusement, le procédé comprend une étape supplémentaire de compactage des préformes sur le noyau ou sur le support par expansion de ce dernier en direction du moule ou d'une enveloppe rigide équivalente.

Avantageusement encore, les préformes présentent des bords de jonction biseautés. Un bord biseauté permet une surface de recouvrement plus étendue avec un bord d'une autre préforme tout en assurant l'épaisseur adéquate de la zone de jonction.

La présente invention se rapport également à une pièce à corps creux en matériau composite pouvant être obtenue par l'un des procédés selon l'invention.

La présente invention sera mieux comprise à l'aide de la description détaillée qui suit en référence au dessin schématique annexé représentant les différentes étapes du procédé objet de l'invention et sur lequel
La figure 1 est une représentation schématique en coupe transversale d'un support pour préformes.
La figure 2 est une représentation schématique en coupe transversale du support de la figure 1 sur lequel une première préforme a été disposée.
La figure 3 est une représentation schématique en coupe de l'ensemble de la figure 2 sur lequel la première préforme est maintenue par le biais d'une enveloppe fibreuse.
La figure 4 est une représentation schématique en coupe transversale du support de la figure 2 sur lequel une deuxième préforme a été disposée.
La figure 5 est une représentation schématique en coupe de l'ensemble de la figure 4 sur lequel la deuxième préforme est maintenu par le biais d'une deuxième enveloppe fibreuse.
La figure 6 est une représentation schématique de l'étape de couture des bords de recouvrement des deux préformes sur le support.
La figure 7 est une représentation schématique de l'étape de compactage.

La présente invention se rapporte à un procédé de fabrication d'une pièce à corps creux, telle qu'une bielle, en matériau composite à partir de préformes.

En l'espèce la présente invention est illustrée par une pièce réalisée à partir de deux préformes 11, 12 sèches découpées à partir d'un patron de réalisation de ladite pièce et initialement préparées à plat. Chaque préforme présente donc une forme adaptée, une géométrie spécifique, un nombre de couches fibreuses apte à remplir le volume final à mouler après leur formage, etc... Chaque préforme 11, 12 présente au moins une couche 111, 121 de fibres transversales s'étendant d'une extrémité latérale 112, 113, 122, 123 à l'autre avec une longueur suffisante.

Bien évidemment, on peut envisager de préparer une partie ou la totalité des préformes 11, 12 en formage léger. Par ailleurs, le procédé objet de l'invention n'est pas limité à un nombre donné de préformes.

Bien que le procédé soit destiné à faciliter l'utilisation de préformes sèches, il est toutefois possible d'envisager le recours à une partie de préformes préimprégnées.

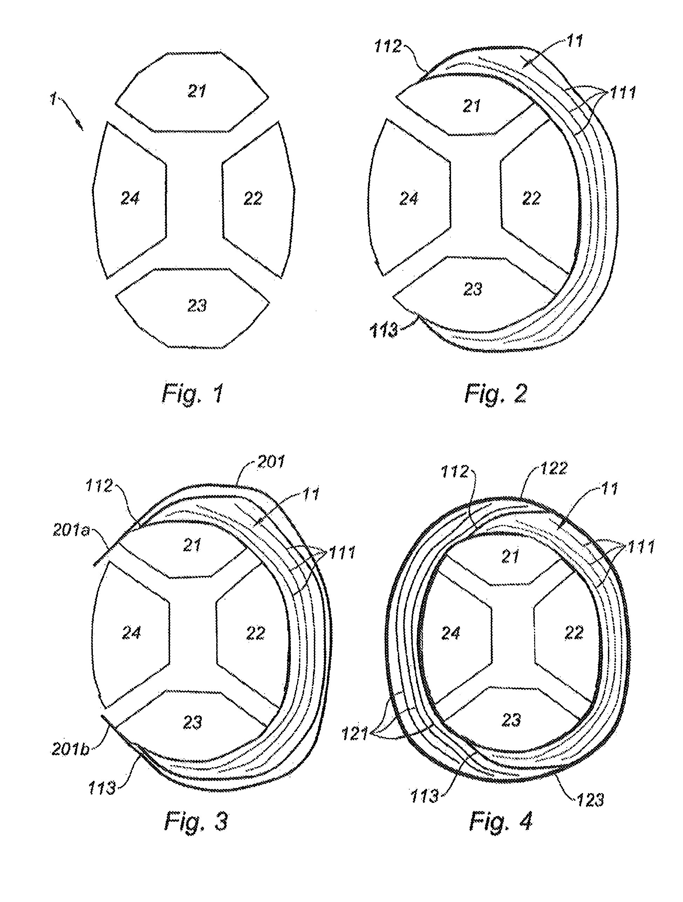

Un support 1 est schématiquement représenté à la figure 1.

On notera que le support 1 est constitué de plusieurs éléments, représenté à la figure 1 en quatre morceaux 21, 22, 23 et 24, dont l'assemblage constitue une forme proche de la géométrie de moulage, et dont un élément au moins est mobile, ceci afin de pouvoir faire varier le périmètre d'enroulement et de contribuer aux opérations de compactage ultérieures, et également de pouvoir extraire le support après les opérations de formage.

Un dispositif mécanique intérieur (non représenté) permet d'expanser ou de contracter légèrement les morceaux 21, 22, 23, 24 pour augmenter légèrement ou réduire le périmètre du support 1.

La première étape du procédé objet de l'invention est représentée schématiquement sur la figure 2 et consiste à enrouler sur le support 1 la première préforme 11, l'enroulement et le formage de la préforme 11 étant piloté par les déplacements de formes externes rigides (non représentées), par des formes souples tendues (non représentées), ou encore par traction sur les fibres transversales 111, 121 les plus longues, ou encore par une combinaison de ces modes, ou encore par succession d'étapes se terminant au moins par l'une des opérations ci-avant, et pouvant être précédée d'opération de formage entre le support 1 ou un autre support de forme proche et vessie souple sous vide, ou contrepartie rigide pressée.

Les extrémités 112, 113, 122, 123 des fibres transversales 111, 121 les plus longues et continues d'un bord latéral à l'autre de la préforme 11, 12 sont ensuite bridées sur le support 1 par un ou plusieurs moyens de maintien. Après quoi, le système de formage peut être écarté.

On notera que la préforme 11 sur le support 1 présente des extrémités 112, 113 biseautées. Ces extrémités 112, 113 peuvent résulter de l'enroulement de la préforme 11. En effet, si les fibres 111 intérieures et extérieures sont sensiblement de même longueur, la section angulaire correspondante sera plus importante pour les fibres 111 intérieures, enroulées autour d'un rayon plus faible. Il en résulte des extrémités 112, 113 biseautées.

Toutefois, cette formation normale d'extrémités 112, 113 biseautées donne rarement des extrémités assez longues. On pourra donc prévoir des préformes 11, 12 possédant, à plat, des bords biseautés, cette longueur de biseau étant accentuée par l'enroulement.

Ces extrémités 112, 113 biseautées sont destinées à former un bord de jonction destiné à être recouvert par un bord de jonction correspondant de la deuxième préforme 12, formé par une extrémité 122, 123 biseautée de cette dernière.

Une fois enroulée sur le support 1 la première préforme 11 est maintenue en place à l'aide de moyens de maintien, par bridage, voire tensionnement de fibres circonférentielles . Divers moyens de maintien sont envisageables.

En l'espèce, la figure 3 présente un moyen de maintien consistant à disposer sur la première préforme une enveloppe fibreuse 201 venant l'enserrer. L'enveloppe fibreuse 201 présente des extrémités latérales 201a, 201b qui sont alors fixées dans le support 1 par tout moyen adapté, préférentiellement par pincement à l'intérieur d'une fente ménagée dans le support 1. Les fibres constituant les extrémités de maintien 201a, 201b) peuvent par une autre variante être des fibres circonférentielles faisant partie de la préforme 11 dont les extrémités seront maintenues dans le dispositif.

Le fait que des fibres circonférentielles, de la préforme 11 ou de l'enveloppe fibreuse 201, soient bridées relativement au support permet que toute partie de préforme circonscrite à ces fibres est contenue en périmètre maximum et maintient ainsi un niveau de compactage entre les couches proche de celui généré par le système de formage, permettant de gérer l'épaisseur par couche à l'état sec.

Le pincement pourra être effectué entre deux morceaux 21, 22, 23, 24 du support 1, ce qui permet d'ouvrir la pince par simple expansion des morceaux dudit support 1.

Ainsi la première préforme 11 maintenue et tendue, on procède à l'enroulement de la deuxième préforme 12 sur le support 1 suivant les mêmes principes de formage, éventuellement à l'aide des mêmes dispositifs de formage qu'utilisés pour la première préforme 11 si la géométrie le permet. Cette deuxième préforme 12 couvre le reste du support 1 et présente des extrémités 122, 123 biseautées venant recouvrir les extrémités 112, 113 biseautées de la première préforme 11 au niveau d'une zone de jonction.

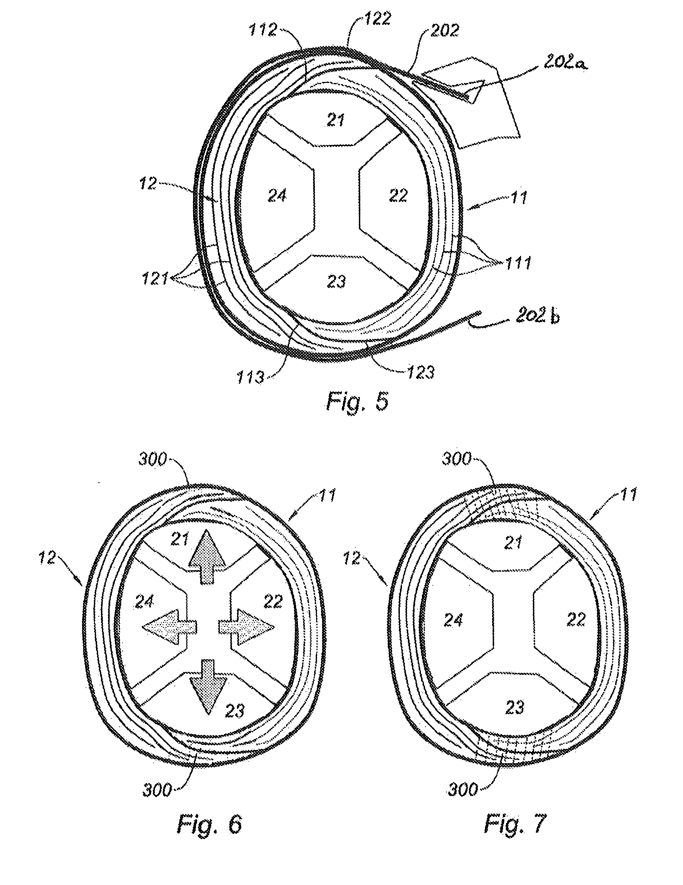

Les extrémités 122, 123 de la deuxième préforme 12 sont alors également bridées et maintenues en place à l'aide de dispositif de maintien, notamment par pincement. Comme pour la première préforme 11, la figure 5 montre le maintien de la deuxième préforme à l'aide d'une deuxième enveloppe fibreuse 202 qui est tendue et pincée afin de maintenir le périmètre extérieur décrit par la préforme 12.

Les moyens de maintien sont réglés et les préformes 11, 12 tendues de manière à obtenir un périmètre extérieur proche du périmètre extérieur de moulage final afin d'obtenir des alignements corrects des fibres circonférentielles lors du moulage.

Les enveloppes fibreuses 201, 202 seront constituées de fibres de même nature ou de nature différentes des fibres des préformes 11, 12.

Comme pour la première préforme 11, les extrémités 202a, 202b, 202a et 202b peuvent être constituées par des surlongueurs de fibres circonférentielles de la deuxième préforme 12.

La figure 6 représente ensuite une étape de compactage des préformes 1 1 , 12. Par des dispositifs d'expansion ou d'écartement des morceaux 21, 22, 23, 24 du support 1, on peut alors augmenter le périmètre décrit par les fibres transversales intérieures, obtenant dans le même temps un compactage des zones de jonction, ce qui concourt à l'alignement des fibres circonférentielles de couches internes.

Il est préférable de maintenir les dispositifs de formage extérieur en place autour de l'ensemble, pour confiner le périmètre extérieur en limitant la tension sur les moyens de maintien de la deuxième préforme 12, par contre les systèmes de bridage de la seule préforme 11 devront être relâchés lors de cette opération afin de permettre le glissement d'expansion du périmètre intérieur.

Comme pour la première préforme 11, les extrémités 202a, 202b peuvent être constituées par des surlongueurs de fibres circonférentielles de la deuxième préforme 12.

Comme représenté sur la figure 7, les préformes 11, 12 sont ensuite solidarisées au niveau de leurs zones de jonction dans une étape de couture.

Cette opération peut être réalisée par des procédés connus de piquage (« stitching », « blind stitching »), touffetage (« tufting ») ou cloutage (« Z-pinning »).

On choisira de préférence un fil 300 de même nature que les fibres constituant les préformes 11, 12 mais avec un titre suffisamment faible pour pouvoir le piquer.

Dans le cas du cloutage, le fil 300 pourra être pultrudé, c'est-à-dire enrobé de résine et polymérisé, avant insertion dans l'assemblage des préformes 11-12.

On choisira également un pas de piquage procurant une cohésion suffisante à l'assemblage tout en conservant une légère possibilité de glissement des couches relativement les unes par rapport aux autres.

On notera que les préformes 11, 12 sont généralement constituées de fibres tissés en trois dimensions. Dans le cas où un réalise une préforme 11 , 12 présentant des extrémités biseautées, ces zones ne peuvent généralement pas être réalisées en trois dimensions et consistent plutôt en une superposition de couches tissées en deux dimensions. L'étape de couture permet de restaurer localement ce tissage trois dimensions, ce qui apporte une meilleure tenue et résistance à l'ensemble.

Pour l'opération de couture, les dispositifs de formage extérieurs peuvent être retirés si les systèmes de bridages des fibres circonférentiels 202 sont suffisants, dans un cas contraire, c'est-à-dire si la maitrise du périmètre extérieur nécessite le maintien de formes extérieur de compactage, ces formes extérieures seront réalisées en morceaux permettant de dégager au fur et à mesure une fenêtre d'accès à la surface externe pour effectuer l'insertion des fils de jonctionnement.

Les moyens de maintien extérieurs ainsi que les dispositifs de formage peuvent alors être démontés après l'opération de couture ou pendant celle-ci lorsque la couture permet déjà une tenue suffisante.

Les extrémités non liées des zones de jonctions, extrémités qui étaient alors pincées, peuvent être coupées ou laissées libres.

Le support 1 est rétracté ou désassemblé en morceaux 21, 22, 23, 24 (bien évidemment, le nombre de morceaux constitutif du support 1 n'est pas limité) pour être extrait de la préforme complète ainsi formée.

On notera aussi que, pour une meilleure efficacité, la couture peut être réalisée sur toute l'épaisseur de la préforme complète. Le support 1 présentera alors des zones martyres localisées au niveau des zones de jonction pour le passage débouchant de l'aiguille de couture. Cette zone pourra être soit d'un matériau mou pénétrable (mousse alvéolaire, par exemple) ou d'une structure fibreuse sèche sensiblement de même genre que la préforme, soit une structure ajourée, telle une sous-structure en Nid d'abeille, soit un outillage rainuré, si on peut maitriser avec assez de précision les positions de traversée des aiguilles.

Dans le cas où l'on utiliserait plus de deux préformes, on pourra bien évidemment effectuer des étapes de coutures selon le procédé décrit de manière à se ramener à des cas à deux préformes.

On notera également, qu'il n'est pas obligatoire que les deux extrémités de chaque préforme aient le même ordre de recouvrement avec les autres préformes. Dans le cas illustré, il n'est donc pas obligatoire que les extrémités 112 et 113 soient toutes deux recouvertes par les extrémités 122 et 123. Il est bien évidemment tout à fait possible que l'extrémité 112 soit recouverte par l'extrémité 122, mais que l'extrémité 113 recouvre l'extrémité 123, ou inversement.

Le procédé décrit permet d'atteindre à la suite de l'étape de compactage et de couture, des taux volumiques de fibres très proches de ceux qui seront obtenus lors du moulage et une cohésion d'ensemble des orientations des fibres facilitant la manipulation de la préforme complète.

L'étape suivante consiste donc en une étape de moulage RTM / LRI selon une procédé connu.

Pour ce faire, un noyau de moulage est introduit à l'intérieur de la préforme en un ou plusieurs morceaux selon la géométrie de la pièce. On connaît également des noyaux en forme de vessie, gonflé à l'intérieur de la préforme.

Toutefois, le noyau sera généralement réalisé en plusieurs éléments présentant des pentes telles qu'elles produisent des mouvements relatifs radiaux lorsqu'ils sont mis en contact avec la préforme complète de manière à maintenir les fibres convenablement alignées et concourent ainsi à l'alignement des fibres circonférentielles.

L'ensemble noyau et préforme est inséré dans le dispositif de moulage comprenant généralement au moins deux matrices. Un compactage final est assuré par la fermeture des matrices extérieures. Il est également possible d'y adjoindre une expansion finale du noyau.

La consolidation de la structure fibreuse est assurée par injection d'une résine liquide selon un procédé RTM / LRI ainsi que par une polymérisation de ladite résine suivant un cycle mécano-thermique approprié.

Selon les besoins, on pourra prévoir des étapes finales d'usinage.

Bien évidemment, l'invention ne se limite pas aux seules formes de réalisation de cette bielle, décrite ci-dessus à titre d'exemple, mais elle embrasse au contraire toutes les variantes de structures à corps creux.

## Revendications

1. Procédé de fabrication d'une pièce à corps creux en matériau composite à partir de préformes (11, 12) comprenant les étapes successives visant à :
- disposer les préformes autour d'un support (1) approprié de manière à ce que chaque préforme (11, 12) présente des bords de jonction (112, 113, 122, 123) venant en contact par recouvrement avec un bord de jonction (122, 123, 112, 113) d'une autre préforme (12, 11) et maintenir chaque préforme (11, 12) sur le support (1) grâce à des moyens de maintien comprenant une enveloppe fibreuse (201, 202) ramenée sur la préforme (11, 12) et l'enserrant sur le support (1),
- lier entre eux les bords de jonction de chaque préforme par couture;
- extraire le support et insérer à sa place un noyau de moulage avant mise de l'ensemble à l'intérieur d'un moule et injection de résine selon un procédé resin transfer moulding, RTM / liquid resin infusion, LRI suivi d'une polymérisation de la résine.

2. Procédé selon la revendication 1, **caractérisé en ce que** la liaison des bords de jonction (112, 113, 122, 123) des préformes (11, 12) est réalisée selon un procédé de couture par piqûre, communément dénommé « stitching » ou « blind stitching ».

3. Procédé selon la revendication 1, **caractérisé en ce que** la liaison des bords de jonction (112, 113, 122, 123) des préformes (11, 12) est réalisée selon un procédé de couture par touffetage, communément dénommé « tufting ».

4. Procédé selon la revendication 1, **caractérisé en ce que** la liaison des bords de jonction (112, 113, 122, 123) des préformes (11, 12) est réalisée selon un procédé de couture par cloutage, communément dénommé « Z-pinning ».

5. Procédé selon l'une quelconque des revendications 1 à 4, **caractérisé en ce que** la couture est réalisée à l'aide d'un fil (300) de carbone.

6. Procédé selon la revendication 5, **caractérisé en ce que** le fil de carbone est un fil pultrudé, c'est-à-dire enrobé de résine.

7. Procédé selon l'une quelconque des revendications 1 à 6, **caractérisé en ce que** les préformes (11, 12) sont des préformes sèches.

8. Procédé selon l'une quelconque des revendications 1 à 7, **caractérisé en ce que** au moins une partie des préformes (11, 12) sont réalisées initialement à plat.

9. Procédé selon l'une quelconque des revendications 1 à 8, **caractérisé en ce que** au moins une partie des préformes sont réalisées initialement en formage faible.

10. Procédé selon l'une quelconque des revendications 1 à 9, **caractérisé en ce que** au moins une partie des préformes (11, 12) sont préalablement mise en forme entre un poinçon et une vessie sous vide ou sous pression avant mise en place sur le support.

11. Procédé selon l'une quelconque des revendications 1 à 10, **caractérisé en ce que** la préforme (11) est maintenue au moyen de pinces équipant le support (1) et aptes à recevoir une extrémité d'un bord de jonction (112, 113) ou de l'enveloppe fibreuse (201, 202) correspondante.

12. Procédé selon l'une quelconque des revendications 1 à 11, **caractérisé en ce qu'**il comprend une étape supplémentaire de compactage, réalisée de préférence avant couture, des préformes (11, 12) sur le noyau ou sur le support (1) par expansion de ce dernier en direction du moule ou d'une enveloppe rigide équivalente.

13. Procédé selon l'une quelconque des revendications 1 à 12, **caractérisé en ce que** les préformes (11, 12) présentent des bords de jonction (112, 113, 122, 123) biseautés.

14. Pièce à corps creux en matériau composite pouvant être obtenue par l'un des procédés selon l'une quelconque des revendications 1 à 13.

## Claims

1. A method for producing a part comprising a hollow body made from a composite material from preforms (11, 12) comprising the following successive steps:
- positioning the preforms around an appropriate support (1) such that each preform (11, 12) has junction edges (112, 113, 122, 123) coming into overlapping contact with a junction edge (122, 123, 112, 113) of another preform (12, 11) and maintaining each preform (11, 12) on the support (1) using maintenance means comprising a fibrous enclosure (201, 202) brought onto the preform (11, 12) and gripping it on the support (1),
- linking the junction edges of each preform by sewing;
- extracting the support and inserting a mold core in its place before placing the assembly inside a mold and injecting resin using a resin transfer molding (RTM) or liquid resin infusion (LRI) method following polymerization of the resin.

2. The method according to claim 1, **characterized in that** the connection of the junction edges (112, 113, 122, 123) of the preforms (11, 12) is made using a sewing method by stitching, commonly called "stitching" or "blind stitching."

3. The method according to claims 1, **characterized in that** the junction edges (112, 113, 122, 123) of the preforms (11, 12) are connected using a sewing method by tufting, commonly called "tufting."

4. The according to claim 1, **characterized in that** the connection of the junction edges (112, 113, 122, 123) of the preforms (11, 12) is done using a sewing method by pinning, commonly called "Z-pinning."

5. The method according to any one of claims 1 to 4, **characterized in that** the sewing is done using a carbon thread (300).

6. The method according to claim 5, **characterized in that** the carbon thread is a pultruded thread, i.e. resin-coated.

7. The method according to any one of claims 1 to 6, **characterized in that** the preforms (11, 12) are dry preforms.

8. The method according to any one of claims 1 to 7, **characterized in that** at least some of the preforms (11, 12) are initially made flat.

9. The method according to any one of claims 1 to 8, **characterized in that** at least some of the preforms are initially made by weak forming.

10. The method according to any one of claims 1 to 9, **characterized in that** at least of the preforms (11, 12) are previously shaped between a punch and a vacuum or pressurized bladder before being placed on the support.

11. The method according to any one of claims 1 to 10, **characterized in that** the preform (11) is maintained using clamps equipping the support (1) and capable of receiving an end of a junction edge (112, 113) or of the corresponding fibrous enclosure (201, 202).

12. The method according to any one of claims 1 to 11, **characterized in that** it comprises an additional compacting step, preferably carried out before sewing, for compacting the preforms (11, 12) on the core or on the support (1) by expanding the latter toward the mold or an equivalent rigid enclosure.

13. The method according to any one of claims 1 to 12, **characterized in that** the preforms (11, 12) have beveled junction edges (112, 113, 122, 123).

14. A part with a hollow body made from a composite material that can be obtained using one of the methods according to any one of claims 1 to 13.

## Patentansprüche

1. Verfahren zur Herstellung eines Teils mit Hohlkörper aus Verbundmaterial aus Vorformlingen (11, 12), das die aufeinanderfolgenden Schritte umfasst, die abzielen auf:
- Anordnen der Vorformlinge um eine geeignete Unterlage (1) derart, dass jeder Vorformling (11, 12) Kontaktränder (112, 113, 122, 123) aufweist, die mit einem Kontaktrand (122, 123, 112, 113) eines anderen Vorformlings (12, 11) durch Überlappen in Kontakt kommen, und Halten jedes Vorformlings (11, 12) auf der Unterlage (1) mit Haltemitteln, die eine fasrige Hülle (201, 202) umfassen, die auf dem Vorformling (11, 12) aufgebracht ist und ihn auf der Unterlage (1) umschließt,
- Verbinden der Kontaktränder jedes Vorformlings miteinander durch Nähen,
- Entfernten der Unterlage und Ersetzen durch einen Formeneinsatz vor dem Einsetzen der Gruppe in eine Form und Einspritzen von Harz gemäß einem resin transfer moulding RTM / liquid resin infusion LRI Verfahren, gefolgt von einer Polymerisierung des Harzes.

2. Verfahren nach Anspruch 1, **dadurch gekennzeichnet, dass** die Verbindung der Kontaktränder (112, 113, 122, 123) der Vorformlinge (11, 12) gemäß einem Stichnahtverfahren, das gewöhnlich als "stitching" oder "blind stitching" bezeichnet wird, durchgeführt wird.

3. Verfahren nach Anspruch 1, **dadurch gekennzeichnet, dass** die Verbindung der Kontaktränder (112, 113, 122, 123) der Vorformlinge (11, 12) gemäß einem Tuftingnahtverfahren, das gewöhnlich als "tufting" bezeichnet wird, durchgeführt wird.

4. Verfahren nach Anspruch 1, **dadurch gekennzeichnet, dass** die Verbindung der (112, 113, 122, 123) der Vorformlinge (11, 12) gemäß einem Nahtvemagelungsverfahren, das gewöhnlich als "Z-pinning" bezeichnet wird, durchgeführt wird.

5. Verfahren nach einem der Ansprüche 1 bis 4, **dadurch gekennzeichnet, dass** das Nähen mit einem Karbondraht (300) durchgeführt wird.

6. Verfahren nach Anspruch 5, **dadurch gekennzeichnet, dass** der Karbondraht ein Pultrusionsdraht ist, das heißt mit Harz ummantelt.

7. Verfahren nach einem der Ansprüche 1 bis 6, **dadurch gekennzeichnet, dass** die Vorformlinge (11, 12) trockene Vorformlinge sind.

8. verfahren nach einem der Ansprüche 1 bis 7, **dadurch gekennzeichnet, dass** mindestens ein Teil der Vorformlinge (11, 12) ursprünglich flach realisiert ist.

9. Verfahren nach einem der Ansprüche 1 bis 8, **dadurch gekennzeichnet**, mindestens ein Teil der Vorformlinge ursprünglich schwach geformt ist.

10. Verfahren nach einem der Ansprüche 1 bis 9, **dadurch gekennzeichnet, dass** mindestens ein Teil der Vorformlinge (11, 12) zuvor, vor Platzierung auf der Unterlage, zwischen einem Stempel und einer Vakuumblase unter Druck geformt wird.

11. Verfahren nach einem der Ansprüche 1 bis 10, **dadurch gekennzeichnet, dass** der Vorformlig (11) mit Zangen gehalten wird, die die Unterlage (1) ausrüsten und in der Lage sind, ein Ende eines Kontaktrands (112, 113) oder der entsprechenden fasrigen Hülle (201, 202) aufzunehmen.

12. Verfahren nach einem der Ansprüche 1 bis 11, **dadurch gekennzeichnet, dass** es einen zusätzlichen Verdichtungsschritt umfasst, der vorzugsweise vor dem Nähen der Vorformlinge (11, 12) auf dem Einsatz oder auf der Unterlage (1) durch Expansion derselben in Richtung der Form oder einer äquivalenten starren Hülle durchgeführt wird.

13. Verfahren nach einem der Ansprüche 1 bis 12, **dadurch gekennzeichnet, dass** die Vorformlinge (11, 12) abgeschrägte Kontaktränder (112, 113, 122, 123) aufweisen.

14. Teil mit Hohlkörper aus Verbundmaterial, das durch eines der Verfahren nach einem der Ansprüche 1 bis 13 herstellbar ist.
